# EUROPEAN PATENT SPECIFICATION

(11) **EP 2 570 337 B1**
(45) Date of publication and mention of the grant of the patent: **29.06.2016**
(21) Application number: 12180745.7
(22) Date of filing: 16.08.2012
(51) Int. Cl.: B62J 6/00, B62J 23/00, B62J 35/00, B62K 11/04, B62J 17/02

(54) **Turn signal structure for saddle ride-type vehicle**
Blinkerstruktur für ein Sattelfahrzeug
Structure de clignotant pour véhicule à monture à selle

(30) Priority: 19.09.2011 JP 2011203921
(43) Date of publication of application: 20.03.2013
(73) Proprietor: Honda Motor Co., Ltd., Tokyo 107-8556 (JP)
(72) Inventor: Suzuki, Yoshitaka, Wako-shi, Saitama 351-0193 (JP); Tako, Kenji, Wako-shi, Saitama 351-0193 (JP)
(74) Representative: Stevens, Jason Paul

(56) References cited:
- FR-A1- 2 616 734
- GB-A- 2 379 432
- JP-A- 7 117 748
- JP-A- 2002 205 674
- JP-A- 2009 073 262
- Thilo Kozik: "Kawasaki Z1000: Auf zur Kurvenhatz", autogazette , 27 April 2007 (2007-04-27), XP002687800, Retrieved from the Internet: URL:http://www.autogazette.de/drucken/4806 3.html [retrieved on 2012-11-20]
- Christoph Lentsch: "Honda CBF1000F", 1000ps.de , 20 January 2010 (2010-01-20), XP002687801, Retrieved from the Internet: URL:http://www.1000ps.de/forum_druck.asp?i d=2347183 [retrieved on 2012-11-20]

## Description

The present invention relates to a turn signal structure for a saddle ride-type vehicle.

A prior art turn signal structure for a saddle ride-type vehicle is disclosed in Japanese Patent Application Publication No. 2009-073262. and a description of this structure will be given below by using the reference numerals as used in Japanese Patent Application Publication No. 2009-073262. Specifically, this turn signal structure for a saddle ride-type vehicle includes: a pair of front forks (3) pivotally supporting a front wheel (2): a vehicle body frame (5) having a head pipe (6) steerably supporting upper portions of the front forks (3); a headlight (60) placed in front of the head pipe (6); and vertically long turn signals (57) respectively placed in front portions of shrouds (56) that are respectively disposed on the left and right sides of a vehicle body.

An alternative form of prior art turn signal structure is disclosed in JP 2002-205674, on which the preamble of claim 1 is based.

It is an object of at least the preferred embodiments of the present invention to improve the visibility of turn signal lamps in an oblique lateral view of a vehicle, in a structure where the turn signal lamps are disposed in the front portions of the shrouds.

According to a first aspect of the present invention, there is provided a turn signal structure for a saddle ride-type vehicle comprising: a pair of left and right front forks pivotally supporting a front wheel; a vehicle body frame including a head pipe steerably supporting upper portions of the front forks; a headlight placed in front of the head pipe; a fuel tank placed behind the head pipe; and turn signal units respectively placed in front portions of shrouds disposed on left and right sides of the fuel tank. each turn signal unit including a lens unit, wherein front faces of the left and right shrouds respectively extend to lateral sides of the left and right front forks, and the turn signal units are placed at the front faces of the shrouds; characterized in that each shroud protrudes forward beyond a shaft centre of the front fork in a side view, and In that each turn signal unit comprises a lens unit continuing from the front face to an upper face of the shroud.

With this arrangement, the front faces of the left and right shrouds extend to the lateral sides of the left and right front forks, and the turn light units are placed in the front faces of the shrouds. Thus, the visibility of the turn signal lamps in an oblique lateral view of a vehicle can be improved while the left and right front forks are protected by the left and right shrouds without increasing the size of the turn signal lamps in a width direction.

The travelling wind becomes turbulent behind the shaft centre of the front fork. However, since the shroud extends forward beyond the shaft centre of the front fork in a side view, a cooling effect can be enhanced by supplying the straightened travelling wind having a high flow rate to either the turn signal lamp or the duct located at the front face of the shroud.

Further, this arrangement makes the upper face of the lens unit of the turn signal unit more visible from a driver of the vehicle. Accordingly, the upper face of the lens unit of the turn signal unit can be made to serve as a turn signal indicator.

Preferably, the headlight includes: a rear portion placed between the left and right front forks; and a front end placed behind a point of intersection between a front side of an outline of the front forks and an outer profile line of the front wheel.

This enables the headlight to be located further to the rear. Thus, the visibility of the turn signal lamps in the oblique lateral view of the vehicle can be improved even when the height of the front face of the shroud (the turn signal unit) is moved up close to the headlight. As a consequence, it is possible to move the height of the front face of the shroud (the turn signal unit) up close to the headlight, and to further improve the visibility of the turn signal lamps in the oblique lateral view of the vehicle.

In a preferred form, each turn signal unit comprises an LED light source, and a board placed behind the LED light source and supporting the LED light source, and each shroud comprises a duct configured to introduce a travelling wind to a lateral side of the board

This enables the board of the turn signal unit to be cooled down by means of the duct provided on the shroud.

In a preferred form, in each turn signal unit, the LED light sources are placed In upper and lower portions of the board, and the turn signal unit comprises a single lens connecting the LED light sources to each other and including a vertically long portion in front of the board.

With this arrangement, a cost reduction can be achieved by decreasing the number of the LED light sources. At the same time, the visibility of the vertically long turn signal lamp can be ensured while preventing an increase in the temperature of the board.

In an alternative preferred form, in each turn signal unit, the LED light sources are placed in front of the board, and the turn signal unit comprises a single lens extending forward from the LED light sources and including a vertically long portion in front of the board.

This arrangement can also achieve cost reduction by decreasing the number of the LED light sources. At the same time, the visibility of the vertically long turn signal lamp can be ensured while preventing an increase in the temperature of the board.

Preferred embodiments of the invention will now be described by way of example only and with reference to the accompanying drawings, in which:
Fig. 1 is a front view of a motorcycle (as an example of a saddle ride-type vehicle) using a first embodiment of a turn signal structure for a saddle ride-type vehicle;
Fig. 2 is a left side view of the motorcycle;
Fig. 3 is a partial perspective view of the motorcycle;
Fig. 4 is a partial front view showing a second embodiment;
Fig. 5 is a partial side view of the second embodiment;
Fig. 6 is a partial perspective view of a third embodiment;
Fig. 7 is a view showing a partial perspective view and a cross-sectional view of a fourth embodiment;
Fig. 8 is a partial perspective view of a fifth embodiment;
Fig. 9 is a partial perspective view of a sixth embodiment; and
Fig. 10 is a partial perspective view of a seventh embodiment.

Embodiments of a turn signal structure for a saddle ride-type vehicle of the present invention will be described below with reference to the drawings. In the drawings, the same or similar components are denoted by the same reference numerals.

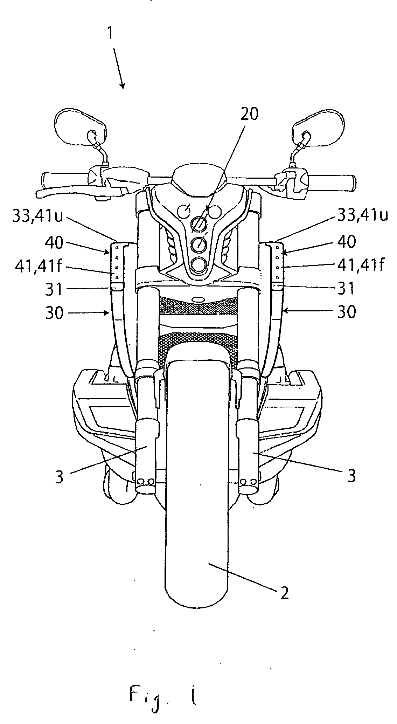

A saddle ride-type vehicle shown in Fig. 1 to Fig. 3 is a motorcycle 1.

This motorcycle 1 includes: a pair of front forks 3 pivotally supporting a front wheel 2; a vehicle body frame 10 having a head pipe 11 steerably supporting the upper portions of the front forks 3; a headlight 20 placed in front of the head pipe 11; a fuel tank 6 supported by the vehicle body frame 10; left and right shrouds 30 respectively placed on left and right sides of the fuel tank 6, and configured to introduce a travelling wind to an engine 7; and turn signal units 40 respectively placed in the front portions of shrouds 30, each turn signal unit 40 being provided with a vertically long lens unit 41 having an extent in a vertical direction and/or an extent in a longitudinal direction which is greater than an extent in a lateral direction.

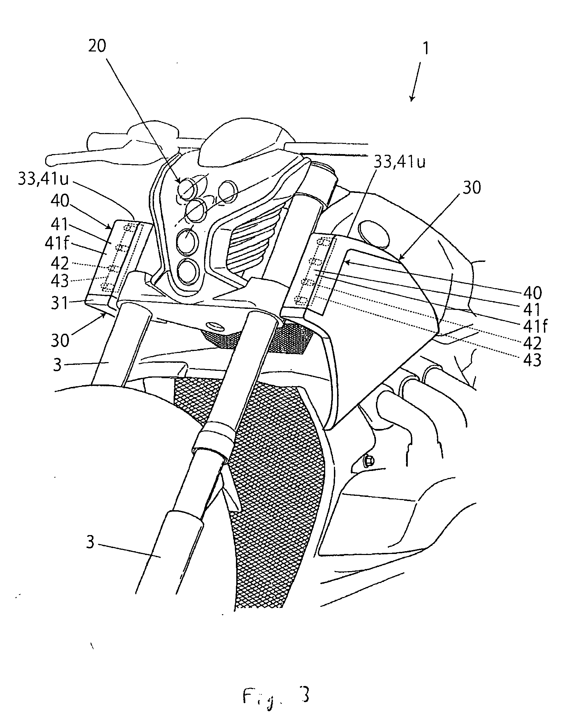

In the turn signal structure of this motorcycle 1, front faces 31 of the left and right shrouds 30 respectively extend to the lateral sides of the left and right front forks 3, and the turn signal units 40 are placed in the front faces 31 of the shrouds 30. Thus, the visibility of turn signal lamps in an oblique lateral view of the vehicle can be improved, as shown in Fig. 3, while the left and right front forks 3 are protected by the left and right shrouds 30 without increasing the lateral size of the turn signals 40.

In the embodiment shown, a front face 41f of a lens unit 41 of each turn signal unit 40 constitutes a part (an upper part in the drawing) of the front face 31 of the corresponding shroud 30. However, this is not always necessary, and the front face 41f of the lens unit 41 may protrude from the front face 31 of the shroud 30, or the front face 31 of the shroud 30 may protrude forward from the front face 41f of the lens unit 41 instead.

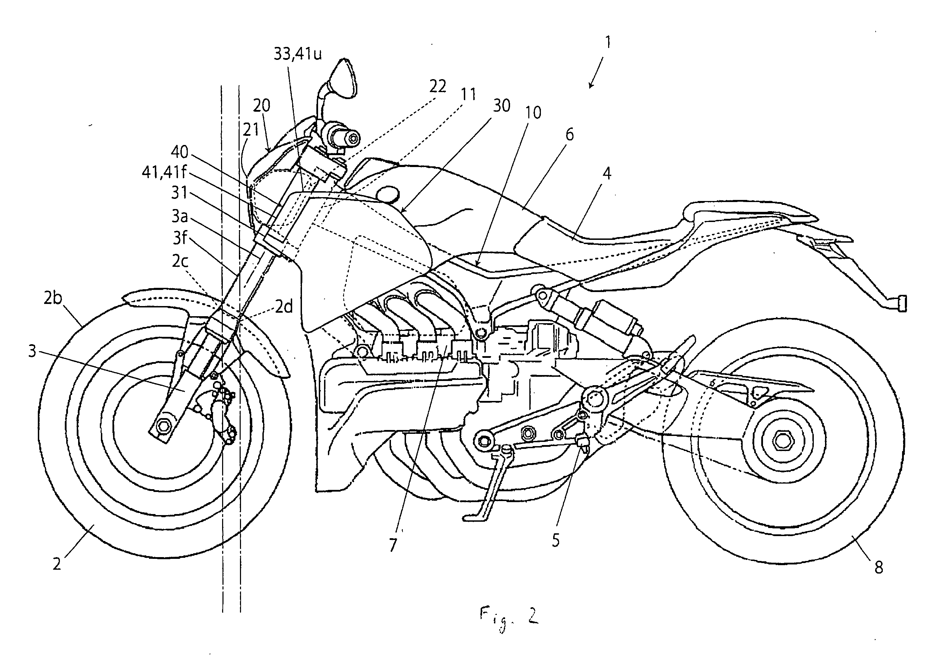

A rear portion 22 of the headlight 20 is placed between the left and right front forks 3 in a side view (as shown in Fig. 2), and a front end 21 thereof is located behind the point 2c of intersection between a front side 3f of an outline of the front fork 3 and an outer profile line 2b of the front wheel 2.

This enables the headlight 20 to be placed rearward. Thus, the visibility of the turn signal lamps in the oblique lateral view of the vehicle can be improved even when the height of each turn signal unit 40 is moved up close to the headlight 20 (see Fig. 3). As a consequence, it is possible to move the height of the turn signal units 40 up close to the headlight 20, and to further improve the visibility of the turn signal lamps 40 in the oblique lateral view of the vehicle.

More preferably, the front end 21 of the headlight 20 is located behind the point 2d of intersection between a rear side 3r of the outline of the front fork 3 and the outer profile line 2b of the front wheel 2.

This can further improve the visibility of the turn signal lamps in the oblique lateral view of the vehicle.

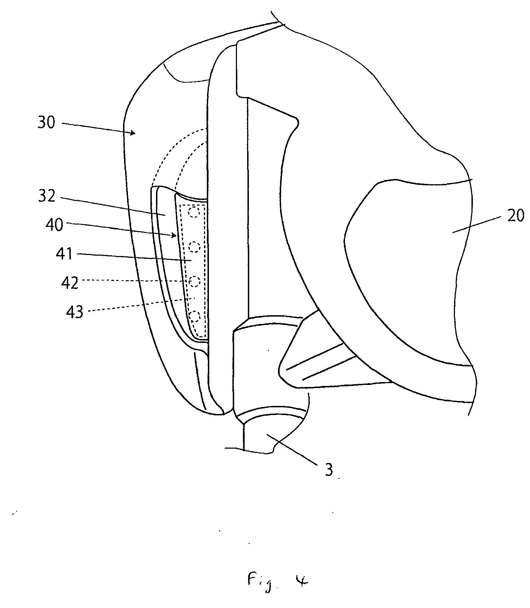

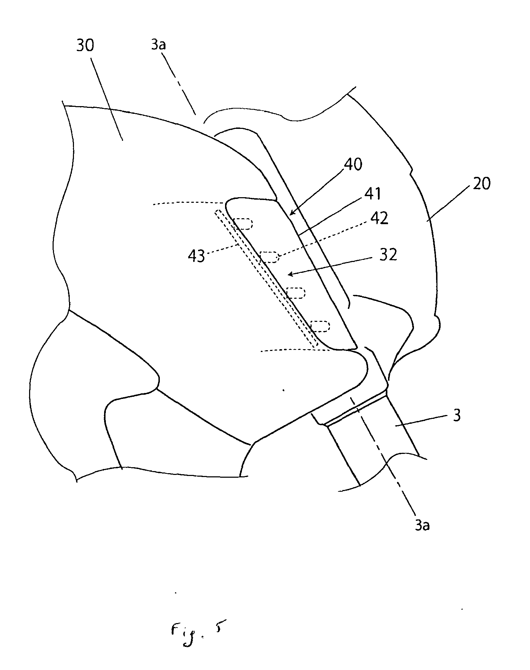

Fig. 4 is a partial front view of an alternative embodiment, mainly showing the shroud 30 provided on the right side of the vehicle body, and Fig. 5 is a right side view thereof.

As shown in Fig. 4 and Fig. 5, the turn signal unit 40 may include LED light sources 42, and a board 43 (a circuit board for the LED light sources 42) placed behind the LED light sources 42, and supporting the LED light sources 42. The shroud 30 may be arranged so as to include a duct 32 for introducing a travelling wind to an outer side of the board 43.

With this arrangement, it is possible to introduce the travelling wind to the board 43 of the turn signal unit 40 by means of the duct 32, and thereby cool down the board 43.

The shroud 30 is arranged such that the shroud 30 extends forward beyond a shaft centre 3a of the front fork 3 in a side view (see Fig. 2 or Fig. 5, for example).

The travelling wind becomes turbulent behind the shaft centre 3a of the front fork 3. Nonetheless, since the shroud 30 extends forward beyond the shaft centre 3a of the front fork 3 in the side view, a cooling effect can be enhanced by supplying a straightened travelling wind having a high flow rate, which flows outside the vehicle body, to either the turn signal lamps 40 or the duct 32 located at the front face of the shroud 30.

As shown in Fig. 2, the front face 41f of the lens unit 41 of the turn signal unit 40 is preferably arranged parallel to the front fork 3. This enables the travelling wind to be straightened by means of the turn signal unit 40 and the front fork 3.

In Fig. 2, reference numeral 4 denotes a seat on which a driver can sit, and reference numeral 5 denotes steps which the driver rests his or her feet on. Reference numeral 8 denotes a rear wheel driven by the engine.

As shown in Fig. 2, the turn signal unit 40 preferably has the lens unit 41 extending backward from the front face 31 of the shroud 30 to a place where the seat 4 is located and continuing to an upper face 33 of the shroud 30.

This makes an upper face 41 u of the lens unit 41 of the turn signal unit 40 more visible from the driver seated on the seat 4.

Accordingly, the upper face 41 u of the lens unit of the turn signal unit 40 can be made to serve as a turn signal indicator.

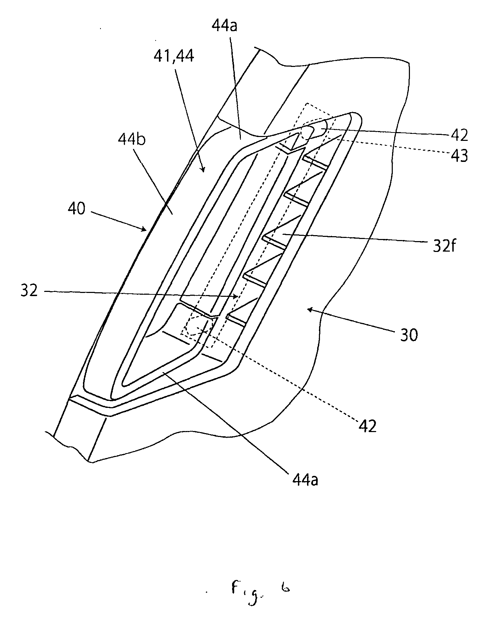

Fig. 6 to Fig. 10 are perspective views of alternative forms of the shroud 30 provided on the left side of the vehicle body, as viewed from a front left side.

As shown in Fig. 6, the turn signal unit 40 may be arranged such that the LED light sources 42 are placed in the upper and lower portions of the board 43, with a single lens 44 connecting the LED light sources 42 to each other and provided with a vertically long portion 44b in front of the board 43. The lens 44 constitutes the lens unit 41.

This arrangement can achieve cost reduction by decreasing the number of the LED light sources 42 (two in the drawing). At the same time, the visibility of the vertically long turn signal lamps can be ensured while preventing an increase in the temperature of the board 43.

The illustrated lens 44 includes the vertically long portion 44b, and a pair of arm portions 44a extending backward integrally from the upper and lower portions of the vertically long portion 44b. The lens 44 is C-shaped in terms of its overall shape in the side view. Light from the LED light sources 42 placed on the two opposite ends thereof is radiated out of the lens via the arm portions 44a and the vertically long portion 44b.

In the drawing, reference numeral 32 denotes the duct, and reference numeral 32f denotes flow straightening plates provided to the duct 32 and extending backward as well as in the lateral direction of the vehicle. The rigidity of the shroud 30 against an external force from an outer lateral side can be enhanced and the LED light sources 42 and the board 42 can be protected by placing the flow straightening plates 32f outside the LED light sources 42 and the board 43 in the lateral direction.

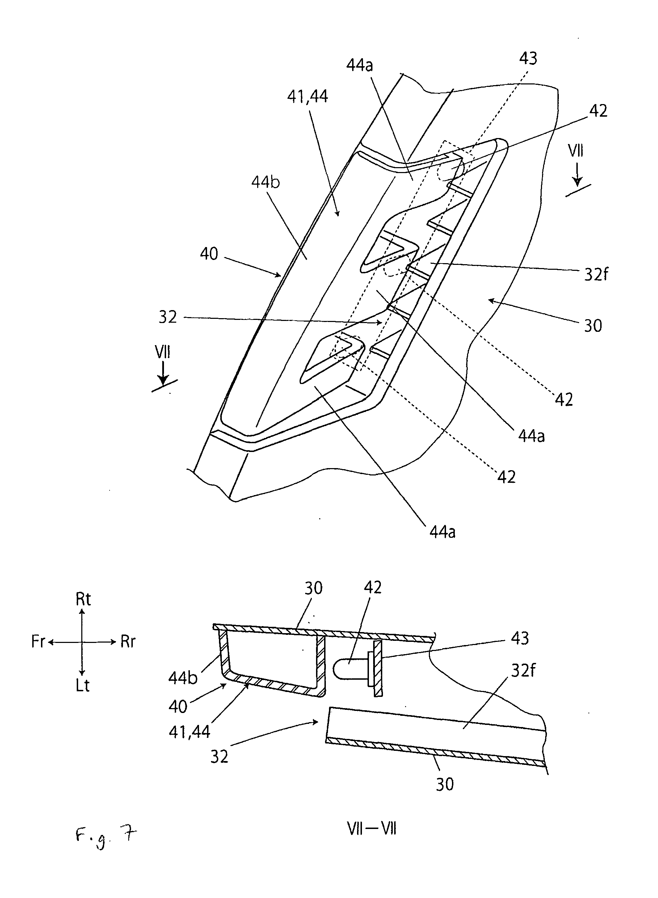

As shown in Fig. 7, the turn signal unit 40 may be arranged such that the LED light sources 42 are placed in front of the board 43, with a single lens 44 extending forward from the LED light sources 42 and provided with a vertically long portion 44b in front of the board 43. The lens 44 constitutes the lens unit 41.

This arrangement can achieve cost reduction by decreasing the number of the LED light sources 42 (three in the drawing). At the same time, the visibility of the vertically long turn signal lamp can be ensured while preventing an increase in the temperature of the board 43.

The illustrated lens 44 is E-shaped in side view in terms of the overall shape, and includes the vertically long portion 44b and three arm portions 44a respectively extending backward integrally from the upper, lower and middle portions of the vertically long portion 44b. Light from the LED light sources 42 that are placed facing the arm portions 44a is radiated out of the lens via the arm portions 44a and the vertically long portion 44b.

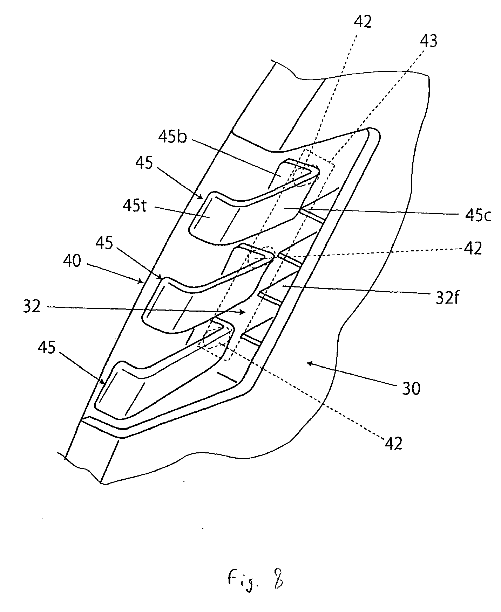

As shown in Fig. 8, the turn signal unit 40 may be arranged such that multiple LED light sources 42 (three in the drawing) are placed in front of the board 43, with multiple lenses 45 extending forward from the respective LED light sources 42. The lenses 45 may collectively constitute the lens unit 41.

This arrangement can achieve cost reduction by decreasing the number of the LED light sources 42 (three in the drawing). At the same time, the visibility from lateral side of the vehicle can also be ensured while preventing an increase in the temperature of the board 43.

Each of the illustrated lenses 45 is C-shaped in plan view, and includes an opposed portion 45b facing the LED light source 42, an extending portion 45c extending integrally forward from this opposed portion 45b, and a front face portion 45t integrally continuing to a front portion of this extending portion 45c. Light from the LED light sources 42 that are placed behind the opposed portions 45b, facing the opposed portions 45b, is radiated out of the lens via the opposed portions 45b, the extending portions 45c, and the front face portions 45t. Since each extending portion 45c is exposed on the lateral side of the vehicle, the visibility from the lateral side of the vehicle is improved. The same applies to the turn signal unit 40 shown in Fig. 7.

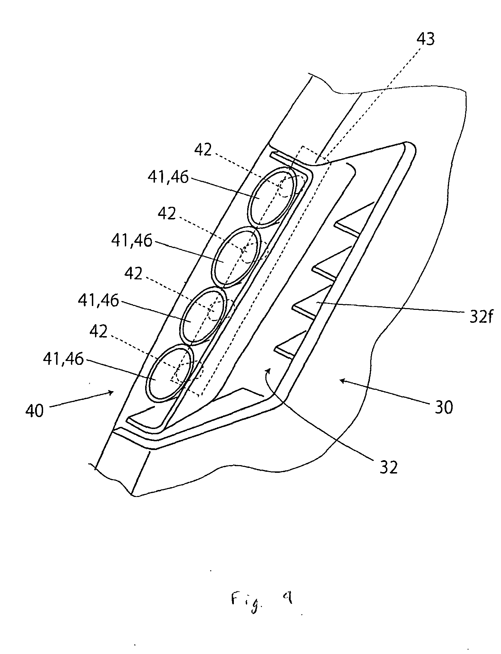

As shown in Fig. 9, the turn signal unit 40 may be arranged such that multiple LED light sources 42 (four in the drawing) are placed in front of the board 43, with cylindrical inner lenses 46 placed respectively in front of the LED light sources 42. The lenses 46 may collectively constitute the lens unit 41.

This arrangement can increase forward light intensity and improve the visibility from a front side.

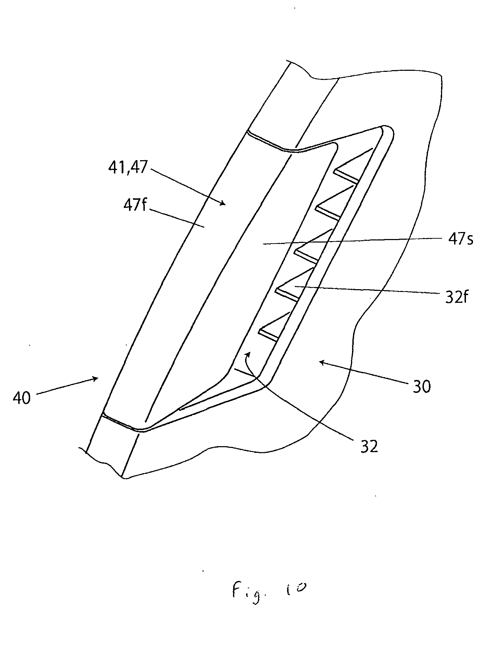

Each of the turn signal units 40 shown in Fig. 6 to Fig. 9 may have an external lens cover 47 as shown in Fig. 10. The external lens cover 47 includes a front portion 47f and a side portion 47s integrated therewith. The provision of the external lens cover 47 makes it possible to obtain the visibility from the lateral side of the vehicle even in the case of the structure shown in Fig. 9, because the front portion 47f and the side portion 47s shine. The external lens cover 47 may constitute the lens unit 41.

While the structures shown in Fig. 6 to Fig. 10 represent the turn signal structure on the left side of the vehicle, the right side structure may also use similar configurations.

Although certain embodiments of the present invention have been described above, the present invention is not limited only to the aforementioned embodiments, and various modifications can appropriately be made within the scope of the present invention as defined by the appended claims.

## Claims

1. A turn signal structure for a saddle ride-type vehicle comprising:
a pair of left and right front forks (3) pivotally supporting a front wheel (2);
a vehicle body frame (10) including a head pipe (11) steerably supporting upper portions of the front forks (3);
a headlight (20) placed in front of the head pipe (11);
a fuel tank (6) placed behind the head pipe (11); and
turn signal units (40) respectively placed in front portions of shrouds (30) disposed on left and right sides of the fuel tank (6), each turn signal unit (40) including a lens unit (41), wherein
front faces (31) of the left and right shrouds (30) respectively extend to lateral sides of the left and right front forks (3), and
the turn signal units (40) are placed at the front faces (31) of the shrouds (30);
**characterized in that** each shroud (30) protrudes forward beyond a shaft centre (3a) of the front fork (3) in a side view, and **in that** each turn signal unit (40) comprises a lens unit (41) continuing from the front face (31) to an upper face (33) of the shroud (30).

2. The turn signal structure according to claim 1, wherein
the headlight (20) includes: a rear portion (22) placed between the left and right front forks (3); and a front end (21) placed behind a point of intersection (2c) between a front side (3f) of an outline of the front forks (3) and an outer profile line (2b) of the front wheel (2).

3. The turn signal structure according to claim 1 or claim 2, wherein
each turn signal unit (40) comprises an LED light source (42), and a board (43) placed behind the LED light source (42) and supporting the LED light sources (42), and
each shroud (30) comprises a duct (32) configured to introduce a travelling wind to a lateral side of the board (43).

4. The turn signal structure according to claim 3, wherein
in each turn signal unit (40), the LED light sources (42) are placed in upper and lower portions of the board (43), and
the turn signal unit (40) comprises a single lens (44) connecting the LED light sources (42) to each other and including a vertically long portion (44b) in front of the board (43).

5. The turn signal structure according to claim 3 or 4, wherein
in each turn signal unit (40), the LED light sources (42) are placed in front of the board (43), and
the turn signal unit (40) comprises a single lens (44) extending forward from the LED light sources (42) and including a vertically long portion (44b) in front of the board (43).

## Patentansprüche

1. Blinkerstruktur für ein Fahrzeug vom Typ, das im Sattel gefahren wird, die umfasst:
ein Paar einer linken und rechten Vordergabel (3), das drehbar ein Vorderrad (2) lagert;
einen Fahrzeugkörperrahmen (10), der ein Lenkkopfrohr (11) enthält, das steuerbar die oberen Abschnitte der Vordergabel (3) lagert;
einen Frontscheinwerfer (20), der vor dem Lenkkopfrohr (11) angeordnet ist;
einen Kraftstofftank (6), der hinter dem Lenkkopfrohr (11) angeordnet ist; und
Blinkereinheiten (40), die jeweils auf den vorderen Abschnitten der Abdeckverkleidungen (30), die auf der linken und rechten Seite des Kraftstofftanks (6) angeordnet sind, angeordnet sind, wobei jede Blinkereinheit (40) eine Linseneinheit (41) enthält,
wobei
sich Vorderflächen (31) der linken und rechten Abdeckverkleidungen (30) jeweils zu den seitlichen Seiten der linken und rechten Vordergabel (3) erstrecken, und
die Blinkereinheiten (40) an den Vorderflächen (31) der Abdeckverkleidungen (30) angeordnet sind;
**dadurch gekennzeichnet, dass** in einer Seitenansicht jede Abdeckverkleidung (30) über eine Achsmitte (3a) der Vordergabel (3) nach vorne übersteht, und dass jede Blinkereinheit (40) eine Linseneinheit (41) umfasst, die sich von der Vorderfläche (31) zu einer oberen Fläche (33) der Abdeckverkleidung (30) fortsetzt.

2. Blinkerstruktur nach Anspruch 1, wobei
der Frontscheinwerfer (20) enthält: einen hinteren Abschnitt (22), der zwischen der linken und rechten Vordergabel (3) angeordnet ist; und ein Vorderende (21), das hinter einem Punkt einer Schnittfläche (2c) zwischen einer Vorderseite (3f) einer Außenlinie der Vordergabeln (3) und einer Außenprofillinie (2b) des Vorderrads (2) angeordnet ist.

3. Blinkerstruktur nach Anspruch 1 oder 2, wobei
jede Blinkereinheit (40) eine LED-Lichtquelle (42) und eine Tafel (43) umfasst, die hinter der LED-Lichtquelle (42) angeordnet ist und die LED-Lichtquellen (42) trägt, und
jede Abdeckverkleidung (30) eine Leitung (32) umfasst, die konfiguriert ist, um einen Fahrtwind in eine seitliche Seite der Tafel (43) einzuführen.

4. Blinkerstruktur nach Anspruch 3, wobei
in jeder Blinkereinheit (40) die LED-Lichtquellen (42) in oberen und unteren Abschnitten der Tafel (43) angeordnet sind, und
die Blinkereinheit (40) eine einzelne Linse (44) umfasst, die die LED-Lichtquellen (42) miteinander verbindet und einen vertikal langen Abschnitt (44b) vor der Tafel (43) enthält.

5. Blinkerstruktur nach Anspruch 3 oder 4, wobei in jeder Blinkereinheit (40) die LED-Lichtquellen (42) vor der Tafel (43) angeordnet sind, und
die Blinkereinheit (40) eine einzelne Linse (44) umfasst, die sich von den LED-Lichtquellen (42) nach vorne erstreckt und einen vertikal langen Abschnitt (44b) vor der Tafel (43) enthält.

## Revendications

1. Structure de clignotant pour un véhicule du type à selle comprenant :
une paire de fourches avant de gauche et de droite (3) supportant à pivotement une roue avant (2) ;
un châssis de caisse de véhicule (10) comprenant un tuyau de tête (11) supportant des parties supérieures des fourches avant (3) de manière à pouvoir les orienter ;
un phare (20) placé à l'avant du tuyau de tête (11) ;
un réservoir de carburant (6) placé derrière le tuyau de tête (11) ; et
des unités de clignotant (40) respectivement placées dans des parties avant de protections (30) disposées sur les côtés de gauche et de droite du réservoir de carburant (6), chaque unité de clignotant (40) comprenant une unité de lentille (41), dans laquelle :
les faces avant (31) des protections de gauche et de droite (30) s'étendent respectivement sur les côtés latéraux des fourches avant de gauche et de droite (3) et
les unités de clignotant (40) sont placées sur les faces avant (31) des protections (30) ;
**caractérisé en ce que** chaque protection (30) fait saillie en avant au-delà d'un centre d'arbre (3a) de la fourche avant (3) en vue latérale et chaque unité de clignotant (40) comprend une unité de lentille (41) qui se prolonge de la face avant (31) à une face supérieure (33) de la protection (30).

2. Structure de clignotant selon la revendication 1,
dans laquelle :
le phare (20) comprend une partie arrière (22) placée entre les fourches avant de gauche et de droite (3) ; et une extrémité avant (21) placée derrière un point d'intersection (2c) entre un côté avant (3f) d'un contour des fourches avant (3) et une ligne profilée externe (2b) de la roue avant (2).

3. Structure de clignotant selon la revendication 1
ou la revendication 2, dans laquelle :
chaque unité de clignotant (40) comprend une source de lumière DEL (42) et une plaque (43) placée derrière la source de lumière DEL (42) et supportant les sources de lumière DEL (42) et
chaque protection (30) comprend un conduit (32) configuré pour introduire un vent mobile vers un côté latéral de la plaque (43).

4. Structure de clignotant selon la revendication 3,
dans laquelle,
dans chaque unité de clignotant (40), les sources de lumière DEL (42) sont placées dans des parties supérieure et inférieure de la plaque (43) et
l'unité de clignotant (40) comprend une seule lentille (44) raccordant les sources de lumière DEL (42) l'une à l'autre et comprenant une partie verticale longue (44b) devant la plaque (43).

5. Structure de clignotant selon la revendication 3
ou la revendication 4, dans laquelle :
dans chaque unité de clignotant (40), les sources de lumière DEL (42) sont placées devant la plaque (43) et
l'unité de clignotant (40) comprend une seule lentille (44) s'étendant en avant depuis les sources de lumière DEL (42) et comprenant une partie verticale longue (44b) devant la plaque (43).
